# DEMANDE DE BREVET EUROPEEN

(11) **EP 1 935 615 A1**
(43) Date de publication de la demande: **25.06.2008**
(21) Numéro de dépôt: 07123551.9
(22) Date de dépôt: 19.12.2007
(51) Int. Cl.: B29C 65/02, B62D 29/04, B62D 27/02, B60R 19/48, B29C 65/10, B29C 65/16, B29C 65/14

(54) **Procédé de solidarisation de première et seconde pièces en matière thermoplastique**

(30) Priorité: 21.12.2006 FR 0611204
(71) Demandeur: Compagnie Plastic Omnium, 69007 Lyon (FR)
(72) Inventeur: Tresse, David, 70210 Polaincourt (FR); Verwaerde, Marc, 38460 Moras (FR)
(74) Mandataire: Remy, Vincent Noel Paul

(57) **Abrégé**

L'invention concerne un procédé de solidarisation d'un élément de carrosserie (10) de véhicule automobile en matière thermoplastique et d'une pièce (20) en matière thermoplastique à plaquer contre une face (14) de cet élément de carrosserie (10), l'élément de carrosserie (10) comprenant une protubérance (16) en saillie de la face (14), la pièce (20) étant conformée de sorte que, lorsqu'elle est positionnée sur l'élément de carrosserie (10), elle comprend une patte (23) qui s'étend sensiblement parallèlement à la protubérance (16). Le procédé comprend un étape de mise en contact de la patte (23) avec la protubérance (16), une étape de chauffage latéral de la patte (23) ou de la protubérance (16), et une étape de pressage de la patte (23) et de la protubérance (16) l'une vers l'autre.

## Description

La présente invention concerne un procédé de solidarisation d'un élément de carrosserie de véhicule automobile en matière thermoplastique et d'une pièce en matière thermoplastique.

Plus précisément, l'invention concerne la solidarisation d'un élément de carrosserie de véhicule automobile en matière thermoplastique et d'une pièce en matière thermoplastique à plaquer contre une face de cet élément de carrosserie, l'élément de carrosserie comprenant une protubérance en saillie de la face, la pièce étant conformée de sorte que, lorsqu'elle est positionnée sur l'élément de carrosserie, elle comprend une patte qui s'étend sensiblement parallèlement à la protubérance. La pièce en matière thermoplastique de véhicule automobile est par exemple un renfort ou un support de capteur.

Il est connu de l'état de la technique de solidariser un tel ensemble par fusion de matière de la protubérance et de la patte.

Pour cela, un procédé de solidarisation connu consiste à solidariser les deux pièces par bouterollage. On rappelle que le bouterollage consiste à former une tête de rivet en écrasant verticalement la protubérance et la patte grâce à un apport de chaleur.

Le bouterollage impose donc de chauffer la protubérance et la patte selon leur hauteur puisqu'il est nécessaire de les écraser verticalement. La durée de chauffage est alors relativement longue pour que la chaleur se propage sur toute la hauteur.

En outre, en orientant le flux de chaleur selon la direction verticale de la nervure, on risque de chauffer la face de l'élément de carrosserie dont saille la protubérance ce qui peut causer des défauts d'aspect cette pièce de carrosserie.

L'invention a pour but de fournir un procédé de solidarisation qui ne présente pas ces inconvénients.

A cet effet, l'invention a pour objet un procédé de solidarisation d'un élément de carrosserie de véhicule automobile en matière thermoplastique et d'une pièce en matière thermoplastique à plaquer contre une face de cet élément de carrosserie, l'élément de carrosserie comprenant une protubérance en saillie de la face, la pièce étant conformée de sorte que, lorsqu'elle est positionnée sur l'élément de carrosserie, elle comprend une patte qui s'étend sensiblement parallèlement à la protubérance, le procédé comprenant les étapes suivantes :
- mise en contact de la patte avec la protubérance,
- chauffage latéral de la patte ou de la protubérance,
- pressage de la patte et de la protubérance l'une vers l'autre.

Grâce à l'invention, on chauffe la protubérance ou la patte latéralement, c'est-à-dire selon leur épaisseur et non plus selon leur hauteur. Ainsi, le temps de chauffe est plus faible que dans l'état de la technique. Le temps de cycle du procédé de solidarisation est donc réduit.

La réduction de ce temps de cycle permet en outre de robotiser cette opération de solidarisation et d'utiliser un unique robot capable d'effectuer successivement plusieurs points de soudure des deux pièces. Les appareils de soudure de l'état de la technique ont un temps de cycle relativement long, ce qui oblige à effectuer plusieurs soudures simultanément et donc à concevoir ces appareils complexes spécifiquement développé pour chaque pièce de carrosserie à assembler. L'invention permet donc de concevoir des appareils de soudure plus simple et réutilisables

De préférence, la patte et la protubérance sont pressées l'une vers l'autre au moyen d'un outil froid. On dit que l'outil est froid si sa température est nettement inférieure à la température de fusion des matières thermoplastiques utilisées pour la fabrication des pièces à solidariser.

Grâce au fait que le chauffage et le pressage sont réalisés au moyen de deux dispositifs distincts, il est possible d'utiliser un outil de pressage froid qui n'adhère pas à la matière thermoplastique fondue comme c'était le cas de la sonotrode de l'état de la technique qui agissait à la fois comme moyen de chauffage et moyen de pressage. Cela permet ainsi d'éviter l'apparition de fils de matière thermoplastique lorsque l'outil froid est séparé après l'étape de pressage, bien que la matière thermoplastique soit encore à l'état fondu. Dans l'état de la technique, le bouterollage était réalisé au moyen d'une sonotrode à ultrasons disposée à proximité de la protubérance. Pour éviter la formation de fils de matière thermoplastique il fallait attendre que la matière thermoplastique fondue refroidisse avant d'éloigner la sonotrode de la protubérance. Grâce à l'utilisation d'un outil froid, on peut donc s'affranchir de cette étape de refroidissement et donc réduire encore plus le temps de cycle de ce procédé de solidarisation. En outre, l'utilisation d'un outil pour presser les pièces l'une contre l'autre permet d'accélérer et d'améliorer le mélange et l'adhérence des matériaux des deux pièces en thermoplastique, même si la fusion résultant du chauffage de ces deux pièces n'a été que partielle.

Alors que dans l'état de la technique, le temps de cycle était de l'ordre de 9 secondes, l'invention permet de réduire ce temps de cycle à 5 seconde ce qui est particulièrement avantageux.

Le procédé de solidarisation de l'invention peut en outre prendre l'une ou plusieurs des caractéristiques suivantes.
- La protubérance est une nervure.
- Le chauffage de la patte ou de la protubérance est réalisé au moyen d'un souffle d'air chaud, d'un laser, ou d'un rayonnement infrarouge.
- On chauffe latéralement la patte ou la protubérance selon une direction sensiblement parallèle à la face de l'élément de carrosserie. Grâce à cela, on ne risque pas d'altérer l'aspect de l'élément de carrosserie puisque le flux de chaleur n'est pas orienté vers l'élément de carrosserie.
- L'outil froid comprend une pince. La pince comprend par exemple deux mâchoires destinées à agir chacune sur l'une des pièces à solidariser.
- La pièce en matière thermoplastique est un renfort de l'élément de carrosserie.
- La pièce en matière thermoplastique est un support de capteur.

L'invention a également pour objet un ensemble d'un élément de carrosserie de véhicule et d'une pièce en matière thermoplastique, caractérisé en ce que l'élément et la pièce sont solidarisés suite à la mise en oeuvre d'un procédé tel que défini précédemment.

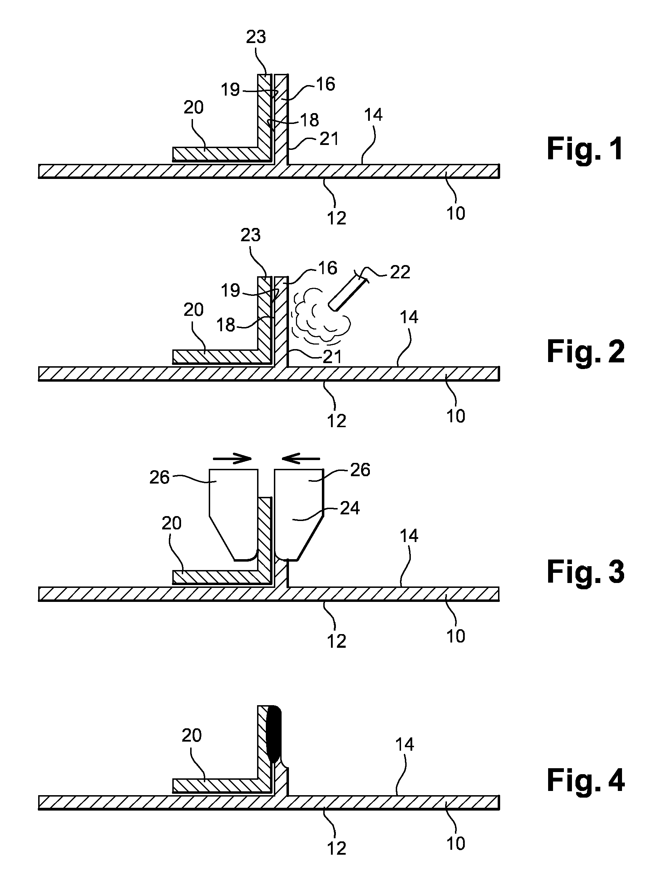

L'invention sera mieux comprise à la lecture de la description suivante faite uniquement à titre d'exemple et se référant aux figures annexées dans lesquelles les figures 1 à 4 sont des schémas de côté de différentes étapes successives du procédé de solidarisation de l'invention.

On a représenté sur les figures 1 à 4 un élément de carrosserie 10 qui est par exemple une peau de pare-chocs. L'élément de carrosserie 10 comprend une face extérieure d'aspect 12 et une face intérieure opposée 14.

La face opposée 14 comprend une protubérance 16, par exemple une nervure. Cette nervure 16 comprend une première surface de contact 18 destinée à venir en contact avec une seconde surface de contact 19 d'une pièce 20 en matière thermoplastique.

Cette pièce 20 est un renfort de peau de pare-chocs qui comprend une patte 23 comprenant la seconde surface de contact 19. Lorsque la pièce 20 est positionnée sur l'élément de carrosserie, la patte 23 s'étend sensiblement parallèlement à la protubérance 16.

Selon une première étape du procédé de l'invention représentée sur la figure 1, on met en contact les surfaces de contact 18 et 19 de la nervure 16 de l'élément de carrosserie 12 et du renfort 20.

Selon une deuxième étape représentée sur la figure 2, on chauffe une surface opposée 21 à la surface de contact 18 de la nervure 16 de l'élément de carrosserie 12, au moyen d'un souffle d'air chaud 22. Le chauffage est suffisamment important pour faire fondre en partie la matière thermoplastique de la nervure 16 sur toute son épaisseur, y compris jusqu'à la surface de contact 18.

Au cours d'une étape suivante représentée sur la figure 3, on presse les deux pièces 20 et 16 l'une vers l'autre au moyen d'une pince 24 qui est froide. Cette pince 24 comprend deux mâchoires 26, chacune en contact avec les surfaces des pièces 20 et 16 opposées aux surfaces en contact 18 et 19 de ces deux pièces.

Au cours d'une étape suivante, on écarte les mâchoires 26 de la pince 24 sans attendre le refroidissement de la matière thermoplastique de la nervure 16. Du fait que les mâchoires 26 sont froides, leur écartement ne provoque pas l'apparition de fils de matière thermoplastique.

On obtient alors un ensemble de l'élément de carrosserie 12 et du renfort 20 solidarisés l'un à l'autre le long de la nervure 16 par fusion de matière thermoplastique.

## Revendications

1. Procédé de solidarisation d'un élément de carrosserie (10) de véhicule automobile en matière thermoplastique et d'une pièce (20) en matière thermoplastique à plaquer contre une face (14) de cet élément de carrosserie (10), l'élément de carrosserie (10) comprenant une protubérance (16) en saillie de la face (14), la pièce (20) étant conformée de sorte que, lorsqu'elle est positionnée sur l'élément de carrosserie (10), elle comprend une patte (23) qui s'étend sensiblement parallèlement à la protubérance (16), **caractérisé en ce qu'**il comprend les étapes suivantes :
- mise en contact de la patte (23) avec la protubérance (16),
- chauffage latéral de la patte (23) ou de la protubérance (16),
- pressage de la patte (23) et de la protubérance (16) l'une vers l'autre.

2. Procédé selon la revendication précédente, dans lequel la protubérance (16) est une nervure.

3. Procédé selon l'une quelconque des revendications précédentes, dans lequel le chauffage de la patte (23) ou de la protubérance (16) est réalisé au moyen d'un souffle d'air chaud, d'un laser, ou d'un rayonnement infrarouge.

4. Procédé selon la revendication précédente, dans lequel on chauffe latéralement la patte (23) ou la protubérance (16) selon une direction sensiblement parallèle à la face (14) de l'élément de carrosserie (10).

5. Procédé selon l'une quelconque des revendications précédentes, dans lequel la patte (23) et la protubérance (16) sont pressées l'une vers l'autre au moyen d'un outil froid (24).

6. Procédé selon la revendication précédente, dans lequel l'outil froid (24) comprend une pince (24).

7. Procédé selon l'une quelconque des revendications précédentes, dans lequel la pièce (20) en matière thermoplastique est un renfort de l'élément de carrosserie.

8. Procédé selon l'une quelconque des revendications précédentes, dans lequel la pièce (20) en matière thermoplastique est un support de capteur.

9. Ensemble d'un élément (10) de carrosserie de véhicule et d'une pièce (20) en matière thermoplastique, **caractérisé en ce que** l'élément et la pièce sont solidarisés suite à la mise en oeuvre d'un procédé selon l'une quelconque des revendications précédentes.
